# EUROPEAN PATENT SPECIFICATION

(11) **EP 1 332 656 B1**
(45) Date of publication and mention of the grant of the patent: **11.04.2007**
(21) Application number: 03250382.3
(22) Date of filing: 22.01.2003
(51) Int. Cl.: A01B 35/16, A01B 35/28, A01D 33/04, A01D 33/08, A01D 17/06

(54) **A soil cultivator**
Bodenfräse
Cultivateur pour le sol

(30) Priority: 23.01.2002 GB 0201416
(43) Date of publication of application: 06.08.2003
(73) Proprietor: Weston, David Booth, Boston, Lincs, PE20 1LY (GB)
(72) Inventor: Weston, David Booth, Boston, Lincs, PE20 1LY (GB)
(74) Representative: Orr, Robert

(56) References cited:
- EP-A- 0 410 808
- DE-A- 19 607 602
- DE-C- 661 407
- GB-A- 2 145 612
- GB-A- 2 232 866

## Description

This invention relates to an agricultural or horticultural soil cultivator incorporating star wheel type soil crumblers, and to a star wheel crumbler for use in such a cultivator, and to a method of operating same.

Star wheels, formed of rubber or suitable plastics material have a plurality of angularly spaced, resiliently deformable, outwardly extending fingers, each finger having a convex leading edge and a concave trailing edge. Assembled onto shafts, the star wheels form rotatable members, which spaced parallel in series and rotated in the same direction form a conveying surface used to separate soil, from root crops in a root crop harvester, and from stones in a stone separator.

Traditionally, mechanised cultivators have steel tines or blades which are driven through the soil and which requires considerable force, resulting in high power requirement and considerable cost of wear and tear to equipment; also low rates of work in difficult soil conditions add to the cost.

UK Patent Publication No. 2145612 (Richard Pearson Limited) discloses a device for separating clod and stones from root vegetables or bulbs. The device comprises two spaced parallel contrarotatable members one of which is in the form of a roller having a rigid outer surface and the other of which has a plurality of radially outwardly extending resiliently deformable projections. The clod and stones fall between members and between the member and roller whilst root vegetables or bulbs pass thereover. The device will normally be installed on a harvester downstream of the final open web of the harvester.

An object of the present invention is to provide a soil cultivating device in which the above-mentioned disadvantages are at least alleviated.

According to the invention there is provided a soil cultivator as defined in claim 1.

Preferably, the star wheels fitted to at least two rotatable shafts form a conveying surface over which soil is broken down or crumbled.

The incorporation of star wheels in accordance with the invention into a cultivator reduces power requirement, increases work rate and reduces the cost of maintenance.

A further object of the present invention is to provide a cultivating device which, in use, is less dangerous than known powered cultivators, particularly small manually operated machines.

In one embodiment of the invention, there is provided an agricultural implement in which soil-crumbling or soil-particle size reduction is achieved by the use of a driven assembly of rotary crumbler elements. The rotary crumbler elements each comprise radially-outwardly projecting fingers comprising a resilient material such as natural or synthetic rubber or related polymers or other plastics materials.

In this same embodiment, the rotary crumbler elements are generally similar in form and construction to the well-known star wheels, (and for simplicity will be referred-to as such) and are formed of the same materials as are suitable for same, but include some significant differences in construction and mode of use.

In general terms, one of the main differences (in this embodiment) from known star wheels and their known uses relates to the aggressivity with which the rotary crumbler elements or star wheels interengage with or attack the soil which is passed to them. The crumbler elements achieve their enhanced aggressivity by virtue of the attitude of the fingers with respect to an adjacent radius through the finger from the axis of rotation of the crumbler elements. In simple terms, the crumbler elements represent an enhancement or widening of the use of same enabling use of star wheels in cultivators as such, which is significant since the existing uses of star wheels do not in realistic practical terms offer any incentive to use same in a dedicated soil crumbling or cultivating implement at all. This is because the construction, and in particular the attitude, of the fingers in known star wheel applications are such that the level of crumbling achieved is, to say the least, quite modest, because the star wheels are constructed and arranged so as simply to lift and convey the material passing over them, thereby to minimise the risk of damage (in the case of the use of star wheels in root crop harvesters), and to minimise the risk of jamming (in the case of use of star wheels in stone separators). Such lifting and conveying is what is required in such applications, and indeed is all that star wheels were designed for. However, as a result of our work in relation to existing uses of star wheels, we have discovered, and have put into practice in this embodiment, a new use of such, which though contrary to the established and understood functions of star wheels (for conveying and lifting while separating root crops and stones), neverthless offers a valuable additional area of use of star wheels (in dedicated cultivators as such) which greatly adds to their utility, and provides the farmer with significant advances in the area of crop cultivations, particularly in relation to power consumption.

In general terms, we have discovered that (for the purposes of this embodiment) star wheels have a valuable new level of soil-crumbling action (making such new uses feasible) if used in a new way,and in a new (meaning different) implement, a cultivator, (with respect to existing uses of star wheels). This "new way" amounts to constructing the star wheels so as to have the above-mentioned more aggressive crumbling action (as opposed to the less significant crumbling action of star wheels as used in root crop harvesting and stone-separating applications, which is insufficient to justify use of such in a dedicated crumbling or cultivating implement). Such aggressive crumbling action is broadly achieved by changing the attitude of the star wheel fingers, particularly the leading edges thereof, having regard to the direction of rotation, with respect to an adjacent radius through the axis of rotation. Thus the attitude (of the fingers, particularly the leading edges thereof), with respect an adjacent radius to the axis of rotation, is radial or nearly-radial or even somewhat beyond radial (in the forward, or rotation direction). Thus, up to 10 degrees either side of the radial position, or, preferably, only up to 5 degrees likewise, will provide this change in action. From this it will be appreciated that in fact results of the same general kind can be obtained by simply using existing star wheels and just reversing their direction of rotation, though they would need to be used within the parameters of use envisaged for embodiments of the invention, in terms of implement design parameters, such as those arising from the implement purpose and affecting such features as the attitude of the conveyor of which the star wheels form part. In other words, the star wheels must be used in a thought-through design in terms of the new use (in accordance with the invention) of such star wheels,

We mention at this juncture that we are aware that there may possibly exist proposals for the use of star wheels in unconventional ways, such as in a reversed attitude, for such purposes as haulm removal in potato or the like crop harvesting, but such usage is of little assistance to the skilled person seeking to find ways to enhance the facilities available for cultivations or crumbling as such, since the process of haulm removal is technically well removed from that of soil crumbling, and the requirements of the star wheels are so different in an application requiring gripping of a slippery crop residue as compared with providing means for effecting a significant crumbling action on the general mass of soil clods which need attention in a cultivation operation.

However, this embodiment does not envisage the simple use of existing star wheels for this new use, with just a change of direction of rotation, because that would fail to meet certain other important parameters of the invention even though these are not essential requirements of the invention in its broadest aspect. Thus for example, there is the question of finger life and durability, and the question of finger blocking and soil release. In terms of finger life, we have found that the new use of star wheels in accordance with the principles applicable to this embodiment puts new and demanding requirements upon the star wheels whereby they would not have an adequate life term (or at least a life comparable to that which users have become used to in terms of known star wheels) unless some measure were taken accordingly. Thus in this embodiment we provide the fingers with greater dimensions in terms of finger thickness so that the flexing which inevitably occurs under the aggressive use conditions do not lead to premature failure. Equally however the increased thickness dimensions of the star wheel fingers has the benefit that the greater mass and hence stiffness of the fingers enables same to perform their new crushing and crumbling function with greater effectiveness than would otherwise be the case.

Likewise, in relation to the features of the fingers of the star wheels which lead to the avoidance of blocking of the star wheels by soil or stones in use, this embodiment provides finger design features which help to avoid such blocking. Broadly, the features which assist in this regard in this embodiment of the invention are the provision of finger leading and trailing edges which are generally linear (producing a generally V-shaped inter-edge gap shape). This is as opposed to the generally convex and concave profiles of the leading and trailing edges, respectively, (producing a generally crescent-formed inter-edge gap shape) in known star wheels.

As a result of this difference, the generally linear inwardly-tapering and straight-edged or V-shaped recesses defined by the gaps between successive finger edges in this embodiment, are not adapted to produce a lodging action on stones and soil which inevitably have the opportunity to become lodged in such gaps from time to time during the passage of large volumes of soil over the star wheels in use.This is because the straight-sided gap edges of this embodiment inherently permit release.. In contrast, the curved edges of the crescent shaped gaps in the (reversed) use of existing star wheels, obviously have an inherent lodging capability arising from their curved profiles which define an entrapment space.

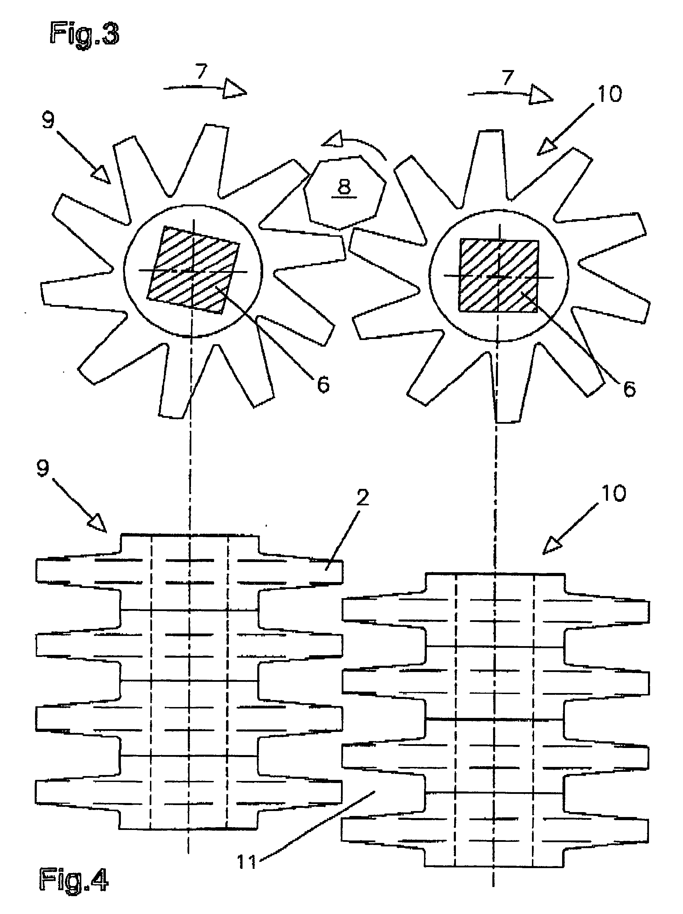

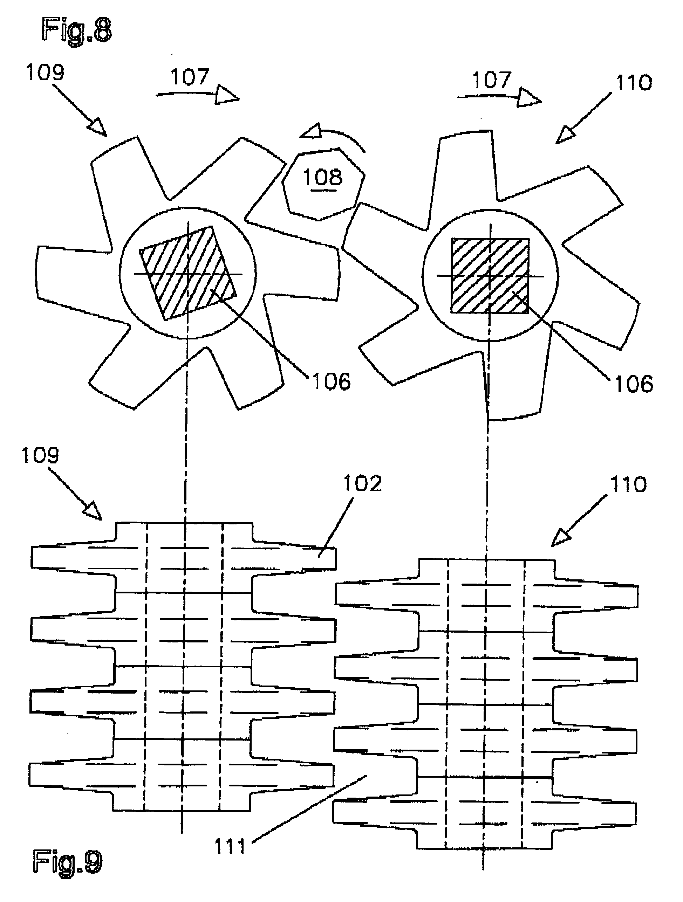

This capability (of this embodiment) to release stones and soil which (in the context of the star wheel's soil crumbling function) might otherwise cause unacceptable lodging and blocking is of major significance. This capability (of this embodiment) to release stones and soil is also to be contrasted with its instantaneous "hammer-and-anvil" capability. Such (latter) capability is in relation to the crumbling action produced by the relative disposition of the finger edge and end profiles (as seen in Figs 3 and 8). For this purpose the disposition and profile and relative proximity of the adjacent finger ends (see Fig 8) or finger edges (see Fig 3), forming an anvil, of the star wheel fingers of the adjacent array of star wheels makes a significant contribution to the crumbling action. The above-discussed clod and stone-release or non-lodging function, in combination with the instantaneous "hammer-and-anvil" capability and the resilient nature of the fingers is more than sufficient, we have found, to produce a performance in use which represents a significant advance in relation to the utility of star wheels.

Summarising the above-discussed aspects of the present embodiment, the cultivator thus provided has a soil-crumbling conveyor which offers a combination of features which are of great utility:
a) a low power-consumption (in comparison to conventional rotary cultivators) due to the fact that all the soil except the clods above a size determined by the sieving spaces between the star wheel fingers is immediately returned to the ground;
b) a good crumbling action due to the aggressive action of the star wheels arising from their finger attitude and design, including finger edge and end profiles and disposition;
c) an ability to release and not to lodge stones and clods arising from the resilient nature of the star wheel fingers, and from the straight-sided and V-format inter-finger gaps;
d) a relatively long life of the principal soil-crumbling elements arising from their well-established use in related abrasive (potato and stone-separating) environments, whereby the materials for such use are well-known.

Preferred embodiments of the invention will now be described with reference to the accompanying drawings, in which:
Figure 1 shows in side view a star wheel for use in a cultivator in accordance with the present invention;
Figure 2 shows in side view a known star wheel of a separating device, for separating soil from a root crop e.g. potatoes, or from stones and clods;
Figure 3 shows in side view two rotatable members of a first embodiment of cultivating device in accordance with the present invention;
Figure 4 shows in plan view the two rotatable members of Figure 3; and,
Figure 5 shows in diagrammatic side view a cultivator in accordance with the present invention;
Figure 6 is a view, similar to Figure 5, showing the soil-working action of the crumbling elements of the cultivation shown in Figure 5; and
Figures 7 to 11 are views, corresponding to Figure 1, 3, 4, 5 and 6, and showing a modified second embodiment of this invention.

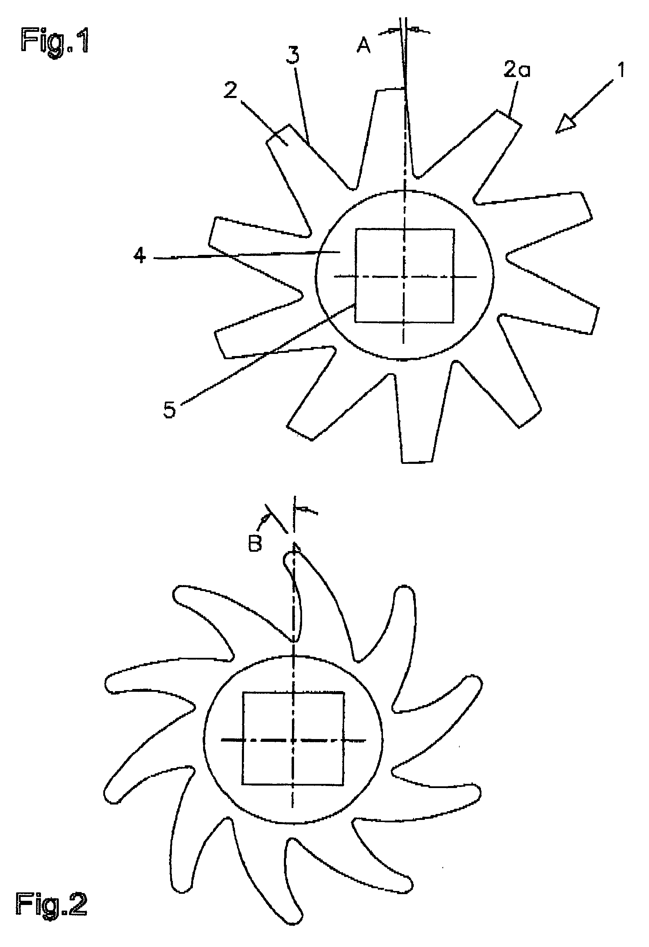

In figure 1 a star wheel designated by reference 1has a plurality of fingers 2 extending from a hub 4, with a square aperture 5 so that the star wheel can be mounted on a rotatable shaft of a soil cultivator (not shown).

In figure 2, there is shown a known star wheel design of the type used in a potato harvester, or in a stone and clod separator. This star wheel of known design works on material which has been dug-up by forwardly mounted soil and crop-lifting components, in the case of a root crop harvester; and to lift soil, stones and clods, and to separate soil from stones and clods in a stone / clod separator.

The star wheel shown in figure 1 differs from the known star wheel shown in figure 2 in that the leading edge 3 (with respect to the direction of rotation) of each finger 2 is inclined at a small angle A to the radius whereas the angle B of the leading edge from the radius of the known star in Figure 2 is about 35 degrees. Also, the circumferential extent of the tip 2a of each finger 2 is greater than the circumferential extent of the fingers of the known star wheel design of Figure 2.

The star wheels shown in Figures 1 and 2 both have 10 fingers and are shown to be the same size. In practice size constraints imposed upon known star wheels by the necessity to handle root vegetables carefully in a root crop harvester, or similarly the necessity to retain small stones within a stone separator require the star wheels to be of a certain maximum size, wherein typically is the range 15 to 25cm diameter. However this size restriction does not apply to the use of star wheels in a cultivator in accordance with the invention which would preferably be substantially larger and more robust, e.g. diameter of about 40cm. Hence the number of fingers and / or the size of a star wheel of a cultivator in accordance with the invention would be determined by trial and error.

In Figure 3 two rotatable members 9, 10 each comprise a plurality of star wheels of figure 1 mounted on parallel shafts 6 rotating in the same direction as shown by arrows 7.

Preferably the star wheels of the rotatable members are arranged sequentially along the shaft so that the fingers of each star wheel are radially aligned with the gaps between the fingers of adjacent star wheels.

The spacing between rotatable members is preferably adjustable.

Also, preferably the speed of rotation of rotatable member 10 is adjustable in relation to the speed of rotation of rotatable member 9.

Preferably, as shown in figure 4, the star wheels of rotatable member 9 are axially staggered relative to the star wheels of rotatable member 10 so that the fingers of the star wheels of one rotatable member are aligned with the gaps between the star wheels of an adjacent rotatable member.

The object 8 shown in figure 3 represents a soil clod being gripped between rotatable members 9, 10 by the action of the fingers of the star wheels, wherein a crumbling action is provided by the angle of attack of the leading edge of the fingers in conjunction with the width of the tip of the fingers.

Also, the increased volume of material at the end of the fingers 2 of the star wheel of figure 1 reduces the wear rate of the star wheels.

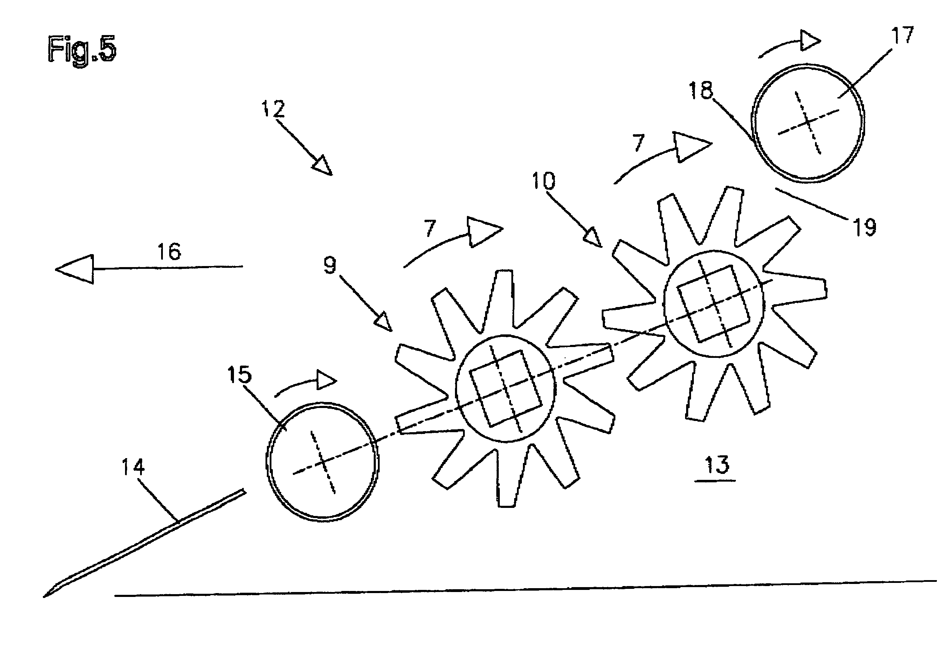

A preferred embodiment of cultivator according to the invention is shown in figure 5, and is designated generally by reference 12. The cultivator has a frame 13 which is pulled forwardly in the direction of the arrow 16, in order to dig-up the soil via a share blade 14 and conveying roller 15 (mounted at the forward end of the frame 13), and which then transfers the material rearwardly to soil-working elements (9, 10).

The share blade 14 therefore forms a digging and lifting means of the soil being cultivated, and the roller 15 transfers the dug-up material onto the surface of the rotatable members 9, 10. The members 9, 10 cooperate to exert a working action on the dug-up material (small and large soil fractions, and small and large clods of soil), and break down the material into smaller sizes.

The sieving action of the rotatable members 9, 10 allows smaller fractions of the soil being cultivated to fall down easily and rapidly through sieving spaces 1 land between adjacent fingers of the members 9, 10 (Figure 4) and onto the surface of the ground, while leaving larger soil fractions, and clods of soil, within the cultivator to be broken down. Therefore, the power required to cultivate the soil is reduced by applying the effort, in the main, to only that portion of the soil which requires a working action to be applied i.e. a crumbling action on large soil fractions and small and large soil clods which are over-sized relative to the sieving spaces 11.

The inclination to the horizontal of a line passing through the axes of roller 15 and rotatable members 9,10, as shown in figure 5, is sufficient to retain clods of soil within the cultivator whilst allowing broken-down soil to be passed over the rear of the cultivator onto the ground.

Further rotatable members may be added downstream of rotatable member 10 of figure 5 to provide increased capacity of the cultivator in accordance with the invention.

In particular, a barrier may be provided downstream of the rear most member 10, in the path of still un-crumbled (or partly crumbled) clods passing over the top of the member 10, and which guides these clods through a restricted working throat or passage in which additional working action is applied to the clods to further break down the material.

In the example, illustrated schematically, a control roller 17 (preferably plain) is arranged above and rearwardly of the member 10, and is driven to rotate in the same direction as member 10, so that the instantaneous lower periphery 18 moves in the opposite direction to the facing tips of the fingers of member 10. This results in an aggressive working action being applied to the clods which are broken down into smaller fragments as they move through a restricted passage or throat19, before falling onto the ground.

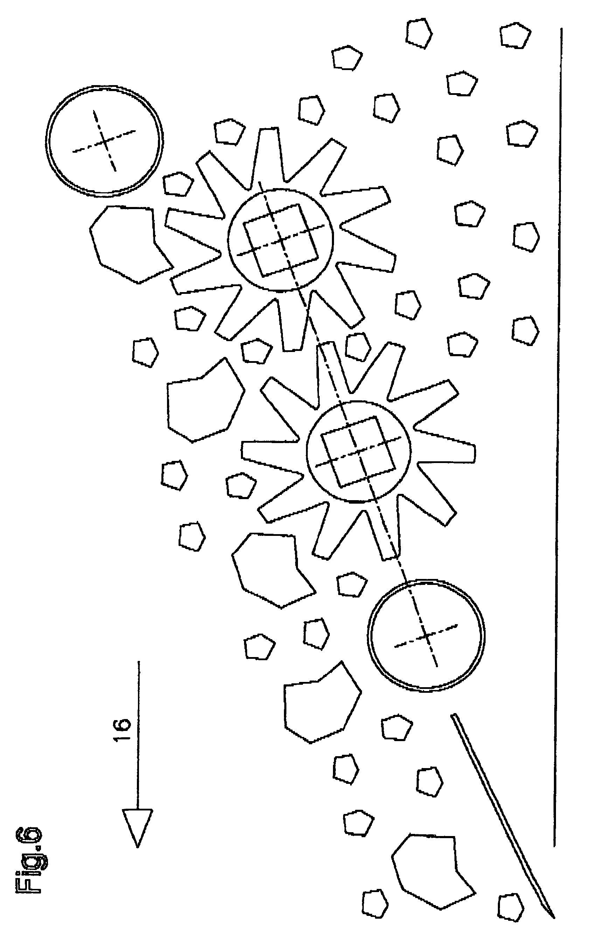

Figure 6 shows schematically the effect of the crumbling action applied to clods of soil as they receive successive working actions during travel over/through the star wheel members 9, 10. Evidently, the presence of the barrier (roller 17) holds back the over-sized clods, as they move over the upper tips of the members 9, 10, and therefore increases the residence time during which aggressive working actions are applied to the clods. This is further augemented by the working action in the zone 20 between the downstream member 10 and the barrier roller 17.

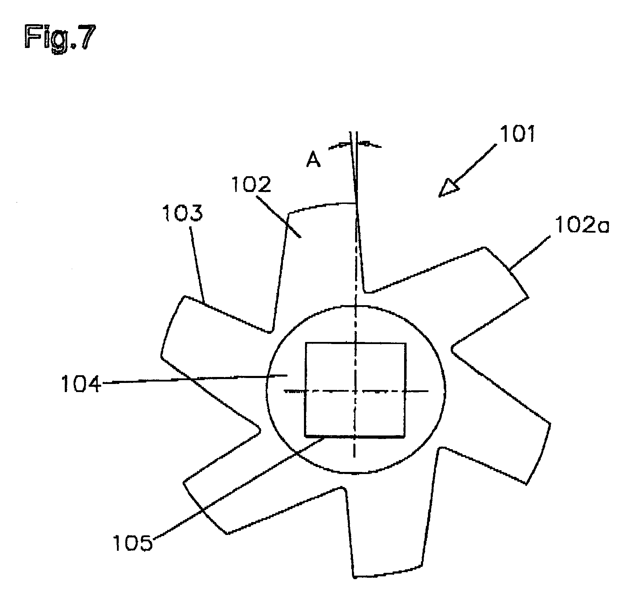

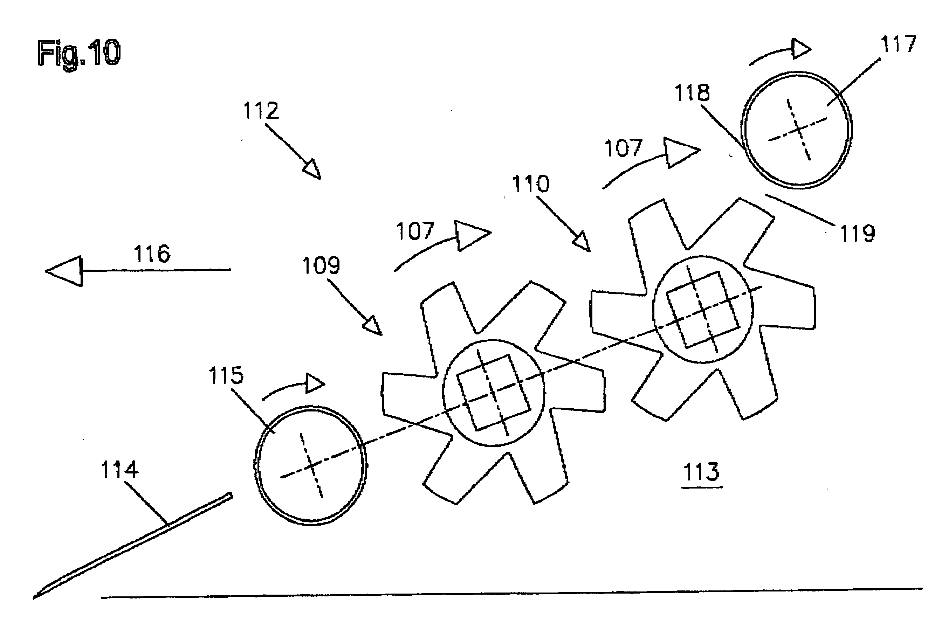

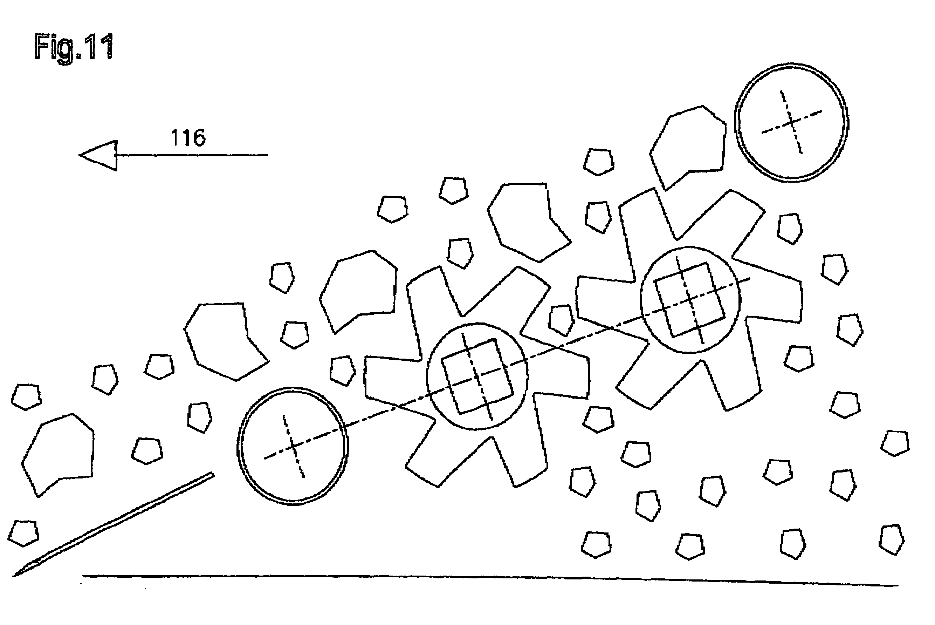

Figure 7 to 11 show a modified embodiment of the invention similar to the first embodiment, and in which corresponding components are given the same reference, but with addition 100. In this embodiment, six fingers 102 are provided having tips 102a which have greater circumferential extent than tips 2a.

In order to increase the useful working life of each star wheel (wear is usually most severe at the tips of each finger and which starts at the leading edge of each tip and migrates circumferentially), it is preferred that the circumferential extent of each tip 2a is in the range 3 to 6% of the circumferential path through which the tip moves during one revolution.

In order to promote an aggressive working action on soil clods 8 by co-operating fingers of adjacent star wheels (see Figure 3), it is preferred that the leading edge 3 of each tip is inclined at a small angle A to the radius from the axis of rotation to the leading edge of the tip which is in the range 0 to 20 degrees.

It has also been found that it may enhance the crumbling action if the speed of successive shafts of the rotatable members (9, 10) is relatively reduced e.g. a 10 to 20% speed reduction of member 10 compared with member 9, which can result in a more aggressive action on the soil clods 8. In the case of more than two rotatable members, the successive speed reductions may be smaller to avoid excessive build-up of over-sized clods at the upstream end of the cultivator. The most effective speed reduction can be determined experimentally, for any particular set of two or more rotatable members.

## Claims

1. A soil cultivator (12) having a frame (13), digging and lifting means (14) at the forward end of the frame (13) and operative to dig-up soil to be cultivated, transfer means (15) arranged on the frame (13) to transfer the dug-up material rearwardly, and soil-crumbling means (9, 10) mounted on the frame (13) rearwardly of the transfer means (15), said cultivator being adapted to return all said dug-up material to the ground during and after soil crumbling; in which: the soil crumbling means comprises a plurality of generally parallel star wheel members (9,10) spaced apart with respect to the direction of travel, and each rotatably mounted on the frame (13); each rotatable member (9, 10) comprises a row of star wheels (1) having outwardly extending fingers (2); and, wherein:
(a) the star wheels (1) of adjacent rows cooperate to define sieving spaces (11) there between through which soil particles can pass downwardly to fall onto the ground and (b) the fingers (2) of each star wheel (1) of one row of star wheels can cooperate with the fingers (2) of a corresponding star wheel of an adjacent row in order to exert a combined crushing action on soil particles and clod material which is oversized relative to said sieving spaces (11), in order to break down or crumble such material prior to discharge onto the ground.

2. A soil cultivator according to claim 1, in which the star wheels (1) of one row are axially staggered relative to the corresponding star wheels of the or an adjacent row.

3. A cultivator according to claim 1 or 2, in which the tips (2a) of the fingers (2) of the star wheels extend generally circumferentially, so that cooperative fingers of one star wheel on one row can co-operate with the tips of the fingers of a star wheel of an adjacent row, to exert a powerful crumbling action on oversized material.

4. A cultivator according to any one of the preceding claims, in which the leading edge (3) of each finger (2) of a star wheel extends at a small angle (A) lying in the range between 0 and 20 degrees to the radius running from the axis of rotation to the leading edge of the tip of the finger.

5. A cultivator according to any one of the preceding claims, in which there is a speed reduction from an upstream rotatable member to an adjacent downstream rotatable member.

6. A cultivator according to any one of the preceding claims, in which the star wheels (1) are operative to discharge over-sized material, after initial crumbling action, to a discharge position rearwardly of the rows of star wheels, and in which a barrier (17) is arranged above and downstream of the rear most of said star wheel members 10, to increase the residence time of engagement of over-sized clods as they pass over the top of the star wheel members (9,10).

7. A cultivator according to claim 6, in which the barrier (17) defines a working zone (20) between the barrier (17) and the rear most star wheel member (10), towards which the over-sized clods are guided.

8. A cultivator according to claim 7, in which the barrier comprises a roller (17).

9. A cultivator according to claim 8, in which the roller (17) is rotatable in the same direction as the rear most star wheel member 10.

10. A cultivator according to any preceding claim,
in which each star wheel comprises:
a hub (4);
a mounting aperture within the hub (4) and defining an axis of rotation of the star wheel; and
wherein the fingers (2) of each star wheel extend outwardly of the hub (4), each finger (2) having an outer tip (2a) having a circumferential extent which is in the range 3 to 6 percent of the circumferential path through which the tip moves during one revolution, and the leading edge (3) of each finger (2) being inclined at a small angle A to the radius from the axis of rotation to the leading edge of the tip (2a) coming in the range 0 to 20 degrees.

11. A cultivator according to any preceding claim, wherein
said soil crumbling means comprises at least two power-rotatable arrays of co-axial resilient star wheel members (9,10), said arrays being mounted for rotation about respective axes spaced apart in the direction of travel, and each array being mounted on the frame (13);
and wherein the resilient fingers (2) of each star wheel (1) of one row or array of star wheels are adapted by their profile and position and attitude to cooperate with the fingers (2) of a corresponding star wheel of an adjacent row or array to exert the combined crushing action.

12. A cultivator according to any preceding claim, **characterised by** the leading edges of said star wheel fingers being disposed at an inclination with respect to a radius through the same location at from 0 to 10 degrees.

13. A cultivator according to claim 12, **characterised by** the leading edges of said star wheel fingers being disposed at an inclination with respect to a radius through the same location at from 0 to 5 degrees.

14. A cultivator according to any preceding claim, **characterised by** the leading and trailing edges of successive circumferentially-spaced fingers on a given star wheel being generally straight in form and defining a generally V-shaped profile adapted to permit in association with the resilience of said fingers the release of clods and stones.

15. A cultivator according to any preceding claim, **characterised by** the leading edges of successive circumferentially-spaced fingers on a given star wheel of one star wheel array being adapted and disposed in relation to the end or trailing edges of the fingers of the co-operating star wheels of the next-following star wheel array of said cultivator to provide, in use, hammer-and-anvil functions, respectively, in relation to the crumbling of clod-and-the-like material passing over said star wheels.

16. A method of soil cultivation comprising:
providing a cultivator implement operative to dig-up soil to be cultivated and comprising soil-crumbling means (9, 10), and causing same to return all dug-up material to the ground during and after soil-crumbling;
**characterised by**
said soil crumbling means comprising at least two power-rotatable arrays of co-axial resilient star wheel members (9,10), said arrays being mounted for rotation about respective axes spaced apart in the direction of travel; and by the step of
causing said star wheels (1) of said arrays to cooperate to define sieving spaces (11) of said cultivator therebetween through which soil particles pass to the ground and causing the resilient fingers (2) of each star wheel (1) of one row or array of star wheels to cooperate with the fingers (2) of a corresponding star wheel of an adjacent row or array to exert a combined crushing action on clod material which is oversized relative to said sieving spaces (11), and thus causing same to break down or crumble such material prior to discharge onto the ground.

## Patentansprüche

1. Bodenbearbeitungsgerät (12), das einen Rahmen (13), Grab- und Hebevorrichtungen (14) am vorderen Ende des Rahmens (13), die zum Aufgraben des zu bebauenden Bodens funktionsfähig sind, Übertragungsmöglichkeiten (15), die am Rahmen (13) angebracht sind, zum Übertragen des aufgegrabenen Materials nach hinten, und bodenzerkrümelnde Vorrichtungen (9, 10), die an dem Rahmen (13) hinter den Übertragungsmöglichkeiten (15) montiert sind, aufweist, wobei das Bodenbearbeitungsgerät dazu geeignet ist, alles aufgegrabenen Material während und nach dem Zerkrümeln des Bodens wieder auf den Boden zurückzugeben; wobei: die bodenzerkrümelnden Vorrichtungen mehrere allgemein parallele Sternradglieder (9, 10) umfassen, die von einander mit Bezug auf die Bewegungsrichtung im Abstand gehalten werden, und wobei jedes rotierbar an dem Rahmen (13) montiert ist; wobei jedes rotierbare Glied (9, 10) eine Reihe von Sternrädern (1) umfasst, die nach außen gerichtete Finger (2) aufweisen; und wobei:
(a) die Sternräder (1) von nebeneinanderliegenden Reihen mit einander zusammenwirken, um Sieberäume (11) dazwischen zu definieren, durch die Bodenteilchen nach unten hindurchgehen können, um auf den Boden zu fallen, und (b) die Finger (2) jedes Sternrads (1) einer Reihe von Sternrädern mit den Fingern (2) eines entsprechenden Sternrads einer danebenliegenden Reihe zusammenwirken können, um eine kombinierte Zermalmungswirkung auf Bodenteilchen und Schollenmaterial, die bzw. das mit Bezug auf die Sieberäume (11) übermäßig groß sind bzw, ist, auszuüben, um derartiges Material zu zerkleinern oder zu zerkrümeln, bevor es auf den Boden abgelassen wird.

2. Bodenbearbeitungsgerät nach Anspruch 1, wobei die Sternräder (1) einer Reihe mit Bezug auf die entsprechenden Sternräder der oder einer danebenliegenden Reihe axial versetzt sind.

3. Bodenbearbeitungsgerät nach Anspruch 1 oder 2, wobei die Spitzen (2a) der Finger (2) der Sternräder sich im Allgemeinen umfangsmäßig so erstrecken, dass zusammenwirkende Finger eines Sternrads an einer Reihe mit den Spitzen der Finger eines Sternrads einer danebenliegenden Reihe zusammenwirken können, um eine kräftige Zerkrümelungswirkung auf übermäßig großes Material auszuüben.

4. Bodenbearbeitungsgerät nach einem der vorhergehenden Ansprüche, wobei die Vorderkante (3) jedes Fingers (2) eines Stemrads sich in einem kleinen Winkel (A) erstreckt, der im Bereich zwischen 0 und 20 Grad zum Radius, der von der Drehungsachse bis zur Vorderkante der Spitze des Fingers erstreckt, liegt.

5. Bodenbearbeitungsgerät nach einem der vorhergehenden Ansprüche, wobei eine Geschwindigkeitsreduzierung von einem rotierbaren, sich stromaufwärts befindenden Glied zu einem danebenliegenden rotierbaren, sich stromabwärts befindenden Glied erfolgt.

6. Bodenbearbeitungsgerät nach einem der vorhergehenden Ansprüche, wobei die Sternräder (1) funktionsfähig sind, um Material einer übermäßigen Größe nach der anfänglichen Zerkrümelungswirkung auf eine Abgabeposition hinter den Reihen von Sternrädern abzugeben, und wobei eine Sperre (17) über und stromabwärts von den hintersten Sternradgliedern 10 angeordnet ist, um die Einrastungsaufenthaltszeit von Schollen übermäßiger Größe zu erhöhen, während sie über die Sternradglieder (9, 10) hinweggehen.

7. Bodenbearbeitungsgerät nach Anspruch 6, wobei die Sperre (17) eine Arbeitszone (20) zwischen der Sperre (17) und dem hintersten Sternradglied (10) definiert, auf das zu die Schollen übermäßiger Größe geleitet werden.

8. Bodenbearbeitungsgerät nach Anspruch 7, wobei die Sperre eine Walze (17) umfasst.

9. Bodenbearbeitungsgerät nach Anspruch 8, wobei die Walze (17) in der gleichen Richtung wie das hinterste Sternradglied 10 rotierbar ist.

10. Bodenbearbeitungsgerät nach einem der vorhergehenden Ansprüche, wobei jedes Sternrad Folgendes umfasst:
eine Nabe (4)
eine Montieröffnung, die sich innerhalb der Nabe (4) befindet und eine Rotationsachse des Sternrads definiert; und
wobei die Finger (2) jedes Sternrads sich von der Nabe (4) nach außen erstrecken, wobei jeder Finger (2) eine äußere Spitze (2a) aufweist, die ein Umfangsmaß aufweist, das im Bereich von 3 bis 6 Prozent des Umfangswegs liegt, durch den die Spitze sich während einer Umdrehung bewegt, und die Vorderkante (3) jedes Fingers (2) in einem kleinen Winkel A zum Radius von der Rotationsachse bis zur Vorderkante der Spitze (2a) geneigt ist, der im Bereich von 0 bis 20 Grad liegt.

11. Bodenbearbeitungsgerät nach einem der vorhergehenden Ansprüche, wobei die Bodenzerkrümelungsvorrichtung mindestens zwei durch Kraftantrieb rotierbare Anordnungen koaxial federnder Sternradglieder (9, 10) umfasst, wobei die Anordnungen zum Rotieren um jeweilige Achsen montiert sind, die in Bewegungsrichtung voneinander im Abstand gehalten werden und jede Anordnung an dem Rahmen (13) montiert ist;
und wobei die federnden Finger (2) jedes Sternrads (1) einer Reihe oder Anordnung von Sternrädern durch ihr Profil und ihre Position und Haltung geeignet sind, mit den Fingern (2) eines entsprechenden Sternrads einer danebenliegenden Reihe oder Anordnung zusammenzuwirken, um die kombinierte Zermalmungswirkung auszuüben.

12. Bodenbearbeitungsgerät nach einem der vorhergehenden Ansprüche, **dadurch gekennzeichnet, dass** die Vorderkanten der Sternradfinger in einer Neigung von 0 bis 10 Grad mit Bezug auf einen Radius durch die gleiche Stelle angeordnet sind.

13. Bodenbearbeitungsgerät nach Anspruch 12, **dadurch gekennzeichnet, dass** die Vorderkanten der Sternradfinger in einer Neigung von 0 bis 5 Grad mit Bezug auf einen Radius durch die gleiche Stelle angeordnet sind.

14. Bodenbearbeitungsgerät nach einem der vorhergehenden Ansprüche, **dadurch gekennzeichnet, dass** die Vorder- und Hinterkanten aufeinanderfolgender umfangsmäßig im Abstand gehaltener Finger an einem vorgegebenen Sternrad im Allgemeinen eine gerade Form aufweisen und ein im Allgemeinen keilförmiges Profil definieren, das geeignet ist, in Verbindung mit der Elastizität der Finger das Freisetzen von Schollen und Steinen zu erlauben.

15. Bodenbearbeitungsgerät nach einem der vorhergehenden Ansprüche, **dadurch gekennzeichnet, dass** die Vorderkanten aufeinanderfolgender umfangsmäßig im Abstand gehaltener Finger an einem vorgegebenen Sternrad einer Sternradanordnung mit Bezug auf die End- oder Hinterkanten der Finger der zusammenwirkenden Sternräder der nächstfolgenden Sternradanordnung des Bodenbearbeitungsgeräts geeignet und so angeordnet sind, dass sie bei der Verwendung jeweils Hammer-und-Amboß-Funktionen mit Bezug auf das Zerkrümeln des schollen- und ähnlichen Materials, das über die Sternräder hinweggeht, bieten.

16. Verfahren zur Bodenbearbeitung umfassend:
das Bereitstellen eines Bodenbearbeitungswerkzeugs das funktionsfähig ist, um zu bebauenden Boden aufzugraben und umfassend Bodenzerkrümelungsvorrichtungen (9, 10) und verursachend, dass dieselben alles aufgegrabene Material während und nach dem Bodenzerkrümeln auf den Boden zurückgeben;
**dadurch gekennzeichnet, dass** die Bodenzerkrümelungsvorrichtungen mindestens zwei durch Kraftantrieb rotierbare Anordnungen koaxial federnder Sternradglieder (9, 10) umfassen, wobei die Anordnungen zum Rotieren um jeweilige Achsen montiert sind, die in Bewegungsrichtung voneinander im Abstand gehalten werden;
und durch den Schritt des
Verursachens, dass die Sternräder (1) der Anordnungen mit einander zusammenwirken, um Sieberäume (11) des Bodenbearbeitungsgeräts dazwischen zu definieren, durch die Bodenteilchen auf den Boden fallen und Verursachens, dass die Finger (2) jedes Sternrads (1) einer Reihe oder Anordnung von Sternrädern mit den Fingern (2) eines entsprechenden Sternrads einer danebenliegenden Reihe oder Anordnung zusammenzuwirken, um eine kombinierte Zermalmungswirkung auf Schollenmaterial, das mit Bezug auf die Sieberäume (11) übermäßig groß ist, auszuüben, und dadurch Verursachens, dass dieses derartiges Material zerkleinert oder zerkrümelt, bevor es auf den Boden abgelassen wird.

## Revendications

1. Cultivateur (12) comportant un châssis (13), un moyen d'excavation et de levage (14) à l'extrémité avant du châssis (13) et servant à retourner le sol à cultiver, un moyen de transfert (15) agencé sur le châssis (13) pour transférer le matériau retourné vers l'arrière, et un moyen d'émottage (9, 10) monté sur le châssis (13) à l'arrière du moyen de transfert (15), ledit cultivateur étant à même de renvoyer l'ensemble dudit matériau retourné vers le sol pendant et après l'émottage, dans lequel : le moyen d'émottage comprend une pluralité d'organes de roue en étoile généralement parallèles (9, 10) espacés par rapport au sens de déplacement, et montés chacun en rotation sur le châssis (13) ; chaque organe (9, 10) rotatif comprend une rangée de roues en étoile (1) comportant des doigts s'étendant vers l'extérieur (2), et, dans lequel :
(a) les roues en étoile (1) de rangées adjacentes coopèrent pour définir des espaces de tamisage (11) entre celles-ci à travers lesquels des particules de sol peuvent passer vers le bas pour tomber sur le sol et (b) les doigts (2) de chaque roue en étoile (1) d'une rangée de roues en étoile peuvent coopérer avec les doigts (2) d'une roue en étoile correspondante sur une rangée adjacente afin d'exercer une action de concassage combinée sur les particules de sol et le matériau en mottes qui est surdimensionné par rapport auxdits espaces de tamisage (11), afin de désagréger ou d'émotter ce matériau avant de le décharger sur le sol.

2. Cultivateur suivant la revendication 1, dans lequel les roues en étoile (1) d'une rangée sont décalées dans le sens axial par rapport aux roues en étoile correspondantes de la rangée adjacente ou d'une rangée adjacente.

3. Cultivateur suivant la revendication 1 ou 2, dans lequel les bouts (2a) des doigts (2) des roues en étoile s'étendent de manière généralement circonférentielle, de sorte que les doigts en coopération d'une roue en étoile sur une rangée peuvent coopérer avec les bouts des doigts d'une roue en étoile d'une rangée adjacente, pour exercer une puissante action d'émottage sur le matériau surdimensionné.

4. Cultivateur suivant l'une quelconque des revendications précédentes, dans lequel l'arête avant (3) de chaque doigt (2) d'une roue en étoile s'étend selon un petit angle (A) se trouvant dans l'intervalle compris entre 0 et 20 degrés par rapport au rayon allant de l'axe de rotation à l'arête avant du bout du doigt.

5. Cultivateur suivant l'une quelconque des revendications précédentes, dans lequel on observe une réduction de vitesse d'un organe rotatif amont à un organe rotatif aval adjacent.

6. Cultivateur suivant l'une quelconque des revendications précédentes, dans lequel les roues en étoile (1) servent à décharger un matériau surdimensionné, après une action d'émottage initiale, vers une position de décharge à l'arrière des rangées de roues en étoile, et dans lequel une barrière (17) est agencée au-dessus et en aval de l'organe le plus en arrière desdits organes de roue en étoile (10), pour accroître le temps de séjour d'engagement des mottes surdimensionnées tandis qu'elles passent au sommet des organes de roue en étoile (9, 10).

7. Cultivateur suivant la revendication 6, dans lequel la barrière (17) définit une zone de travail (20) entre la barrière (17) et l'organe de roue en étoile le plus en arrière (10), vers laquelle les mottes surdimensionnées sont guidées.

8. Cultivateur suivant la revendication 7, dans lequel la barrière comprend un rouleau (17).

9. Cultivateur suivant la revendication 8, dans lequel le rouleur (17) est rotatif dans la même direction que l'organe de roue en étoile le plus en arrière (10).

10. Cultivateur suivant l'une quelconque des revendications précédentes, dans lequel chaque roue en étoile comprend:
un moyeu (4);
une ouverture de montage à l'intérieur du moyeu (4) et définissant un axe de rotation de la roue en étoile, et
dans lequel les doigts (2) de chaque roue en étoile s'étendent vers l'extérieur du moyeu (4), chaque doigt (2) comportant un bout externe (2a) présentant une étendue circonférentielle qui se trouve dans l'intervalle compris entre 3 et 6 pour-cent du trajet circonférentiel à travers lequel le bout se déplace pendant une révolution, et l'arête avant (3) de chaque doigt (2) étant inclinée selon un petit angle A par rapport au rayon allant de l'axe de rotation à l'arête avant du bout (2a) tombant dans l'intervalle compris entre 0 et 20 degrés.

11. Cultivateur suivant l'une quelconque des revendications précédentes, dans lequel:
ledit moyen d'émottage comprend au moins deux réseaux pouvant être entraînés en rotation par force d'organes de roue en étoile élastiques coaxiaux (9, 10), lesdits réseaux étant montés pour rotation autour d'axes respectifs espacés dans le sens du déplacement, et chaque réseau étant monté sur le châssis (13);
et dans lequel les doigts élastiques (2) de chaque roue en étoile (1) d'une rangée ou d'un réseau de roues en étoile sont à même de par leur profil et leur position et leur attitude de coopérer avec les doigts (2) d'une roue en étoile correspondante d'une rangée ou d'un réseau adjacent pour exercer l'action de concassage combinée.

12. Cultivateur suivant l'une quelconque des revendications précédentes, **caractérisé en ce que** les arêtes avant desdits doigts de roue en étoile sont disposées selon une inclinaison par rapport à un rayon à travers le même emplacement comprise entre 0 et 10 degrés.

13. Cultivateur suivant la revendication 12, **caractérisé en ce que** les arêtes avant desdits doigts de roue en étoile sont disposées selon une inclinaison par rapport à un rayon à travers le même emplacement comprise entre 0 et 5 degrés.

14. Cultivateur suivant l'une quelconque des revendications précédentes, **caractérisé en ce que** les arêtes avant et arrière de doigts espacés de manière circonférentielle successifs sur une roue en étoile donnée sont de forme généralement droite et définissent un profil généralement en forme de V pour permettre, en association avec l'élasticité desdits doigts, la libération des mottes et des pierres.

15. Cultivateur suivant l'une quelconque des revendications précédentes, **caractérisé en ce que** les arêtes avant de doigts espacés de manière circonférentielle successifs sur une roue en étoile donnée d'un réseau de roues en étoile sont à même de, et sont disposées par rapport à l'extrémité ou aux arêtes arrière des doigts des roues en étoile en coopération du réseau de roues en étoile immédiatement suivant dudit cultivateur pour, remplir, en fonctionnement, des fonctions de marteau et d'enclume, respectivement, par rapport à l'émottage du matériau en mottes et analogues passant par-dessus lesdites roues en étoile.

16. Procédé de culture du sol comprenant :
la mise à disposition d'un instrument formant cultivateur servant à retourner le sol à cultiver et comprenant un moyen d'émottage (9, 10), et le fait d'amener celui-ci à renvoyer l'ensemble du matériau retourné vers le sol pendant et après l'émottage;
**caractérisé en ce que**
ledit moyen d'émottage comprend au moins deux réseaux pouvant être entraînés en rotation par force d'organes de roue en étoile élastiques coaxiaux (9, 10), lesdits réseaux étant montés pour rotation autour d'axes respectifs espacés dans le sens du déplacement;
et par l'étape suivante :
le fait d'amener lesdites roues en étoile (1) desdits réseaux à coopérer pour définir des espaces de tamisage (11) dudit cultivateur entre ceux-ci à travers lesquels des particules de sol passent vers le sol et le fait d'amener les doigts élastiques (2) de chaque roue en étoile (1) d'une rangée ou d'un réseau de roues en étoile à coopérer avec les doigts (2) d'une roue en étoile correspondante d'une rangée ou d'un réseau adjacent afin d'exercer une action de concassage combinée sur le matériau en mottes qui est surdimensionné par rapport auxdits espaces de tamisage (11), et ainsi amener ceux-ci à désagréger ou à émotter ce matériau avant de le décharger sur le sol.
